# EUROPEAN PATENT APPLICATION

(11) **EP 3 680 776 A1**
(43) Date of publication of application: **15.07.2020**
(21) Application number: 19150697.1
(22) Date of filing: 08.01.2019
(51) Int. Cl.: G06F 9/54

(54) **SYSTEM AND METHOD FOR MANAGING EVENTS IN A SOFTWARE SYSTEM**

(71) Applicant: Advanced Digital Broadcast S.A., 1293 Bellevue (CH)
(72) Inventor: Powchowicz, Tomasz, 65-119 Zielona Gora (PL)
(74) Representative: Blonski, Pawel

(57) **Abstract**

The present invention relates to a managing events in a software system. In particular, the present invention relates to managing event listeners, including callbacks and their integrity within a software system. Events management in a software system is designed such that messages may be delivered from an event source to an event listener, without changing the execution context.

## Description

### TECHNICAL FIELD

The present invention relates to a managing events in a software system. In particular, the present invention relates to managing event listeners, including callbacks and their integrity within a software system.

### BACKGROUND OF THE INVENTION

One of methods for designing a system for distribution of notifications, that operates in different execution contexts, is to lock a mutual exclusion (mutex), before dispatching an event and release it after said dispatch.

An execution context is a stack of contexts (function calls). As the execution of a software program continues, the program will 'jump' from one function to another. As each function has its own Execution Context, these function calls will create a stack of contexts, which changes upon each execution of a function call.

In such context, the mutex protects a modification of the array of callbacks. Such an approach has a serious issue related to deadlocks, because from the notification context there can not be called any method on the notifier that is using the mutex. The aforementioned drawback may be mitigated by a recursive mutex, because calling third-party modules can cause other issues such a deadlock with a few mutexes involved or other problems related to the mutual exclusion e.g. priority inversion. The callback implementation stores the data and often changes the execution context to follow the callback routine. However, changing an execution context drops information about the callstack, and additional tools and techniques have to be used for tracing the route of the event through a system, which is time and resources consuming.

Another approach may be realised by acquiring a mutex only for a copy or copy-on-write of the callbacks and distributing an event to each callback in the array. In this case, a callback can be deregistered during the distribution of the event and the object can go out of the scope. One of the methods of resolving this issue is to prolong the lifetime of the event listener and marking the event listener as invalid before deregistration. The synchronization of data is moved from the implicit form in the notification system to the explicit form in the event listener.

The next known approach is implemented by introducing another dispatcher with a prolonged lifetime, and changing execution context inside it, so that the events are registered, deregistered and notified in the same execution context. Introducing the third component is well known in the methods such as message passing in the actor model. The actor model is a conceptual model to deal with concurrent computation. It defines some general rules for how the system's components should behave and interact with each other.

In specific scenarios, caused due to software separation, a bug or designed to work in a parallel processing arrangement, a notifier cannot maintain the callee lifetime and it can not guarantee that the last notification will be delivered before the event listener deregistration. Such conditions may cause an issue of the last notification that could race with the event listener's destruction. The other methods allow to implement clean message passing, but with a cost of changing execution context.

It would be advantageous to design events management in a software system wherein messages may be delivered from an event source to a listener, without changing the execution context.

### SUMMARY AND OBJECTS OF THE PRESENT INVENTION

An object of the present invention is a method for managing events in a computer software system, comprising: at least one source of events; a Dispatcher module configured to send events to event listeners created by a Keeper module; the method being characterized in that it comprises the steps of: creating a new Event Listener object and assigning to it a new private space identifier by a private address space resolver module comprising an object lifetime manager operating as an owner of all event listeners having a private space identifier; using the identifier, registering a callback routine in a Notifier system configured to manage events; sharing the ownership of the Event Listener object between the object lifetime manager and the keeper operating in parallel;
- in said object lifetime manager: upon receiving an event from the Dispatcher module, resolving the Private Address Space identifier to the Event Listener's object address; executing the callback routine and checking, during said execution, the state of the Event Listener object and if the Event Listener object is not valid, due to lack of ownership by the Keeper, stopping the callback routine; after closing the callback, denoting that the extended lifetime of the Event Listener is over, deregistering the callback stops thereby stopping the process of delivering notifications;
- in said Keeper: awaiting an event to end the life-time of the Event Listener and when such event has been received, deregistering the callback with the respective Private Address Space identifier;
- wherein said event listener object may only be destroyed when neither the Keeper nor the Object Lifetime Manager require it to be alive.

Preferably, said private space identifier is unique within a private address space.

Preferably, a detection of a time when an Event Listener object may be destroyed is based on an intrusive pointer technique.

Preferably, said shared ownership of the Event Listener object between the object lifetime manager and the keeper operating in parallel, is present for a time of dispatching a notification to the Event Listener object.

Preferably, said resolving the Private Address Space (PAS) identifier to the Event Listener's object address is effected by translating said identifiers to virtual addresses wherein at the virtual addresses there are located pointers to the respective Event Listeners.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method managing events in a software system. Further details and features of the present invention, its nature and various advantages will become more apparent from the following detailed description of the preferred embodiments shown in a drawing, in which:
Fig. 1 presents a general overview of the system according to the present invention;
Fig. 2 shows a block diagram of distributing a notification from an event source to an event listener;
Fig. 3. depicts a block diagram of a situation when a Dispatcher can prolong a lifetime of an Event Listener;
Fig. 4 depicts a block diagram of a situation when a Dispatcher can not prolong a lifetime of an Event Listener;
Fig. 5 illustrates a method of handling notification using a Private Address Space Resolver; and
Fig. 6 shows an example of mapping between addresses from the Private Address Space Resolver to addresses from a virtual address space.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

The present invention focuses on delivering a message from an event source without changing execution context of a given software. Nevertheless, the execution context can be changed in the Event Listener if a programmer decides to do it explicitly.

The message delivery, from an event notifier (in particular an event source) to the event listener (in the same execution context), is important when the delivery time is crucial for a given system e.g. in the case of a Set Top Box, when a data section is delivered from a demultiplexer and the decision made on this section data influences other data currently broadcast.

The present invention introduces a Private Address Space Resolver between an event notifier and an event listener and translates said private address space addresses into virtual ones and ensures the lifetime of the callee is extended for a callback routine. An event notifier uses private addresses instead of operating on the virtual addresses. Such an approach creates an abstraction layer in addressing between the event notifier and the event callback. The Private Address Space Resolver can create new and distinct addresses in that space and binds them to virtual addresses.

In computing, a virtual address space (VAS) or address space is the set of ranges of virtual addresses that an operating system makes available to a process.

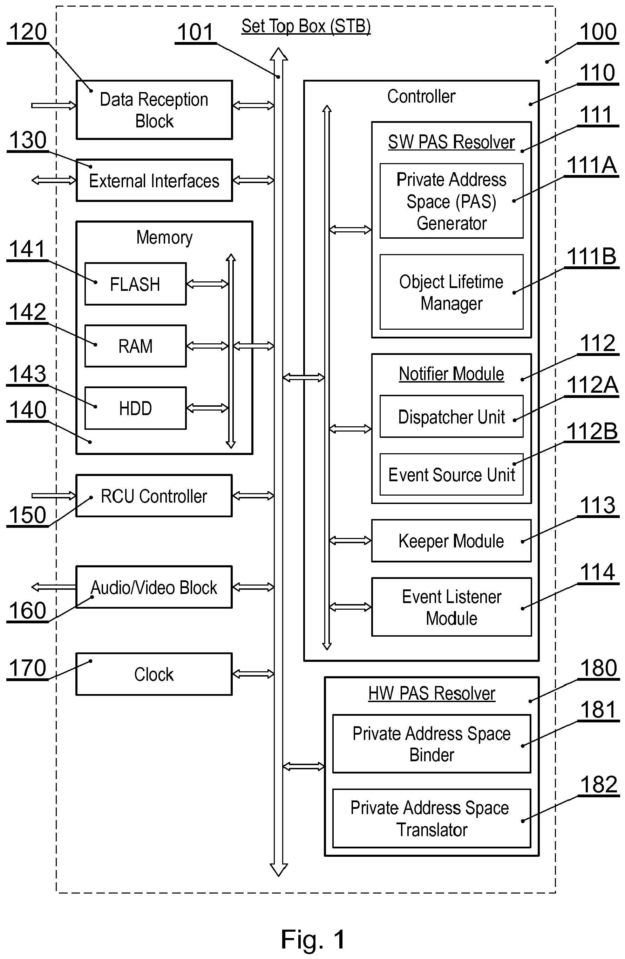

Fig. 1 shows elements of a Private Address Space Resolver system (111) embedded in a Set Top Box (100). In general any computer, running software may be a basis for implementation of the present invention. A controller of such system (110) may comprise the following modules.

The Private Address Space (PAS) Resolver (111) comprises a private address space generator (111A) cooperating with a software or a hardware Private address space binder (181) as well as with a software or hardware Private Address Space translator (182) and a Object Lifetime Manager (111B).

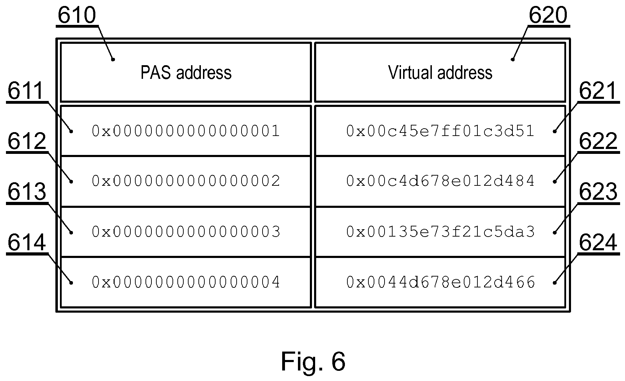

The Private Address Space (PAS) binder (181) is configured to create a new entry in a Private Address Space (PAS) translation table, as will be shown with reference to Fig. 6.

The Private Address Space translator (182) is configured to translate a Private Address Space (PAS) address to the virtual one as will be shown with reference to the forthcoming figures.

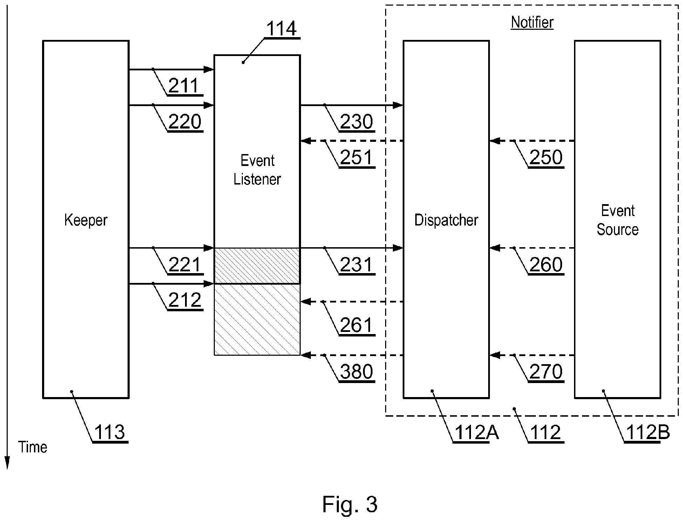

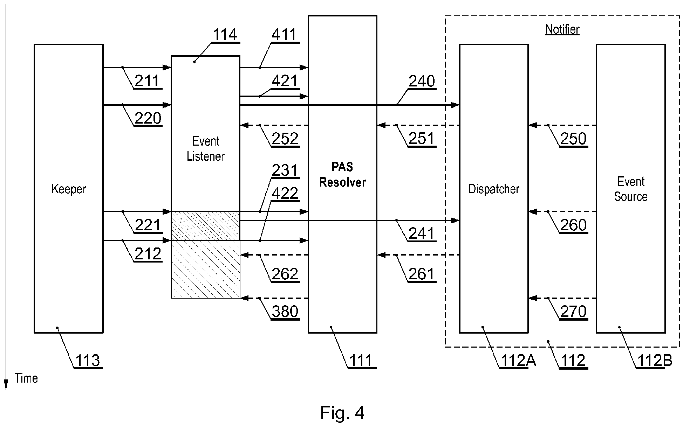

The Object Lifetime Manager (111B) is configured to keep an event listener (114) alive based on the state of the system. The Object Lifetime Manager (111B) is a part of the Private Address Space (PAS) Resolver (111) in case of the embodiment of Fig. 4 or in case of the embodiment shown in Fig. 3, the Object Lifetime Manager (111B) may be implemented by the Notifier (112), which supports events management with extension of lifetime of event listeners (114). The Object Lifetime Manager (111B) operates as an owner of all event listeners (114) having a private space identifier assigned.

The Private Address Space (PAS) Resolver (111) works with a Notifier Module (112) as well as with a Keeper module (113), which shares the ownership of an Event Listener Module (114) with the Notifier Module (112).

The Notifier Module (112) creates events (250, 260, 270) (by means of the Event Source Module (112B)) and comprises a dispatcher unit (112A) responsible for sending events to event listeners (this is a widely known concept in programming) and an event source unit (112B) responsible for generating events (i.e. objects in the system based, for example, on hardware triggers such as keyboard keypresses or mouse movements).

The other elements of the system are typical modules known in the art i.e. a Data Reception Block (120), External Interfaces (130), a Memory (140), an RCU controller (150), an A/V Block (160), a Clock (170), which carry their typical functions.

A Hardware PAS Resolver (180) may be delegated to hardware to increase the speed of operations on the linear address space (this term will be defined in details with reference to Fig. 6) such as address binding and address translation.

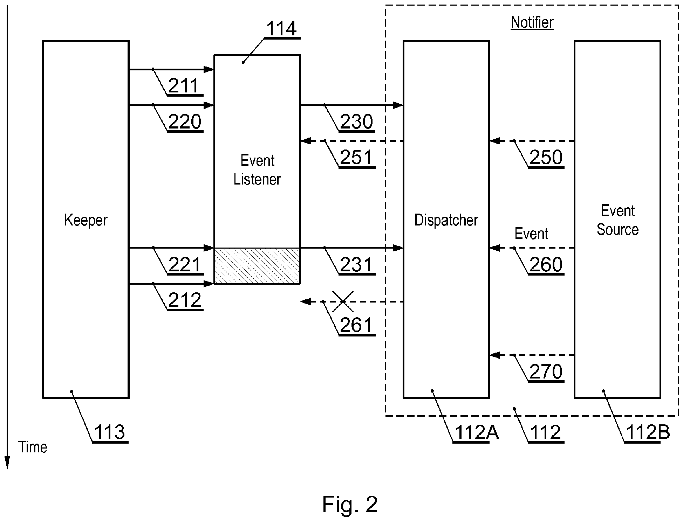

Fig. 2 presents a block diagram of distributing a notification (an event) from an event source to an event listener. This is how events (250, 260, 270) are distributed in typical systems. The process uses the following modules of the system: the Keeper (113), the Event Listener (114), the Dispatcher Unit (112A) and the Event Source (112B)).

The Keeper Module (113) creates (211) an event listener (114) according to its configuration (this is an assumption as such). After creating the event listener (114) object the start method (220) is called on it (this is a typical method in programming systems). The method causes registration (230) of the event listener (114) object by the Dispatcher Unit (112A) in the Notifier Module (112).

When the Keeper (113) decides to stop activity (and in turn said event listener (114)), it calls (221) (a reason for stopping an activity depends on system state and current activities in said system; 221 is an invalidation action by setting a state informing that the object is no longer needed) a stopping routine. That implies removing a callback (231) (earlier set up by action 230) from the Dispatcher Unit (112A). After invoking (212) (212 is a request to delete the object or, in the following embodiments, an information that the Keeper (113) will not reference the object any more i.e. it may be removed) (i.e. said event listener (114) has been executed and its use has been finalised) the Event Listener (114) is destroyed and the memory used by it is released. When the Event Source (112B), which may be tightly coupled with the Dispatcher Unit (112A), outputs an event (250), the Dispatcher Unit (112A) propagates the event (251) to the Event Listener (114).

When the Event Source (112B) sends (260) an event to the Dispatcher Unit (112A) and the Event Listener (114) removes the callback (231) at the same time (which is an example of a scenario), the Dispatcher Unit (112A) must resolve a race. When the race is not resolved it may cause (261) an undefined behaviour by sending the event to the released (212) Event Listener (114). When the Event Source (112B) emits the event (270) and the Event Listener (114) is deregistered, the Dispatcher Unit (112A) does not send a further notification.

Fig. 3. presents system for distributing notifications where the Dispatcher (112A) can prolong a lifetime of the Event Listener (114). The figure is a modification of Fig. 2.

The extended period of the lifetime is from (212) to (380) and is defined in order to finish the sending of the notification (261) (in general when processing of the respective notification (261) has finished). The system according to the present invention, guarantees that the last notification (270) will not be delivered after the deregistration of a callback (231). Thus, Fig. 3 presents a basic principle of the solution according to the present invention.

The notification (261) was thus delivered as the last one, because the lifetime of the Event Listener (114) was extended so that this particular notification could safely reach its destination. However, there is not any delivery of the event (270), because the callback (231) was deregistered before (270) any only the (260) notification is considered as occurring simultaneously or nearly simultaneously (i.e. causing said racing) to the callback de-registration request (231).

Fig. 4 presents a scenario where the Dispatcher Unit (112A) can not prolong the lifetime of the Event Listener (114) due to Notifier Unit's (205) constraints (for example an API (112A) does not support object lifetime management). In other words a mechanism of prolonging the life of an event listener (114) object may be achieved in legacy systems where a legacy Dispatcher Unit (112A) cannot be modified (e.g. developed by a third party).

Maintaining the lifetime of the Event Listener (114) is shared with the PAS Resolver (111). It is the aim of the present invention to manage an object's lifetime by two entities i.e. the Keeper (113) and the PAS Resolver (111).

Similarly as in Fig. 3, the lifetime of the event listener object is extended from a time instant (212) to a time instant (380) and it is locked to process a dispatched the event (261). The PAS Resolver (111) uses a mapping between the Event Listener (114) and the Dispatcher Unit's (112A) address space (the address is assigned at step (411).

The Event Listener (114) requests (411) an address from the Private Address Space during an event listener object's creation. After granting the event listener object's address (as will be shown in Fig. 6) from the Private Address Space, the ownership of the Event Listener (114) is locked (421) until (422) by the Keeper (113). The ownership is also locked for each notification (251, 241) and kept for the time of delivering notifications (252, 262). In case of the event notification (262) the delivery ends at (380) time.

In Fig. 4 the most important aspect is the sequence of events and not particular times at which they happen. The events (260, 270) will be processed as described with reference to Fig. 3.

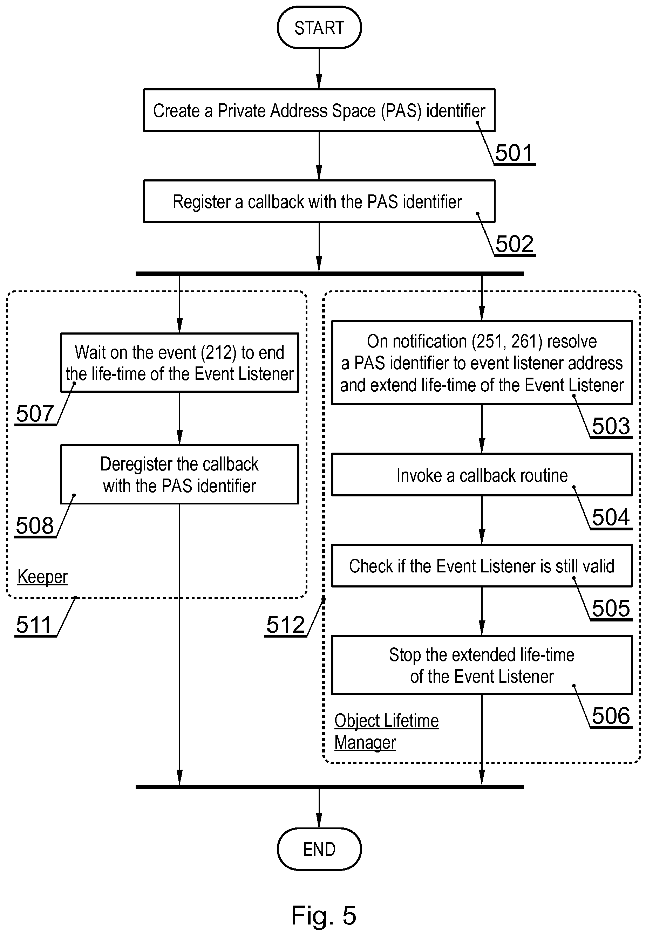

Fig. 5 illustrates a method of handling notification using Private Address Space Resolver. Said addresses may also be called identifiers because an address (from a hardware perspective) is an identifier (the address is unique in an address space). Private address space is a local (per system address space), which is not shared outside a given system.

Firstly, for a new EventListener object (114) a new private space identifier (unique within said private address space) is assigned (501). With the identifier a callback is registered (502) in the Notifier system (112).

The particular steps of Fig. 5 are related to the following items of Fig. 4:
501 ->411;
502 -> 421;
503 -> 251, 261;
504 -> 252, 262;
505 -> is executed within the Event Listener (114);
506 -> 380 for 262;
507 -> is a time between 220 to 221;
508 -> 231.

Upon receiving an event from the Dispatcher (503), the Private Address Space (PAS) identifier is resolved to the Event Listener's (114) address. The ownership of the Event Listener (114) is at that time shared (i.e. an object may have more than one owner and it may only be destroyed when none of the owners need the object) for the time of dispatching a notification. Without extending (which is done by applying a shared ownership) the lifetime of the Event Listener (114) for the time of dispatching a notification, said Event Listener (1145) could be deleted while a notification (related to an event (260)) is being sent to it.

The callback routine is executed (504). During execution, the state of the Event Listener (114) object is checked at step (505). If the Event Listener object (114) is not valid (there is not present an ownership by the Keeper (113)) the callback routine (252, 262) is not continued.

After closing the callback (506), the extended lifetime of the Event Listener (114) is over). The deregistration of the callback stops the process of delivering notifications (507).

In particular, at step (507) the Keeper (113) awaits an event (212) to end the life-time of the Event Listener (114). When such event has been received, at step (508), the Keeper (113) deregisters the callback with the respective PAS identifier.

The processes (511) and (512) run in parallel. An event listener may be destroyed when neither the Keeper (113) nor the Object Lifetime Manager (111B) require it to be alive. This may happen either at step (508) or (506).

For example, if step (506) is finished before step (508), the Object Lifetime Manager (111B) will end the life of the Event Listener (114) upon delivery of any pending notification (251, 261).

Fig. 6 is an example of mapping between addresses from the PAS Resolver (111) to addresses from the virtual address space. The PAS Resolver (111) entries (611-613) are translated to virtual addresses (621-624). At the virtual addresses (621-624) there are located pointers to the respective Event Listeners (114).

In the present invention, messages may be delivered from an event source to an event listener, without changing the execution context, because there will not arise a problem with delivery of the (261) event in case of scenarios of Fig. 3 and 4.

### Exemplary embodiment:

The Keeper (113) creates Event Listener (114) and requests a new private address in the PAS resolver (111) and register the object in it to share its lifetime. The new private address is generated by the Private address space generator (111A).

Generating the address can be simplified to atomic incrementation of the unsigned long integer data type. e.g. 64 bit or 128 bit. The number of objects in space can be enough for the lifetime of the application. In other cases, the address generation could have protection (for overflow) and checks if the address is already used. In that case, the next free address can be used.

For the process of registration of the Event Listener (114) there is responsible the Private Address Space Binder (181). The PAS Binder (181) creates a new entry in the PAS translation table (610). Then the Keeper (113) reserves an ownership in the Object Lifetime Manager (111B) using the assigned private address.

When the Keeper (113) decides to start listening to the events (220), the Event Listener (114) uses the private address space to register (240) for notifications in the Dispatcher (112A) in the Notifier block (112).

When the Keeper (113) decides to stop activity calls (221), and that implies removing a callback (231) from the Dispatcher (112A). After said removal, the ownership (212) of the Event Listener (114) may be not destroyed because the ownership may be kept (406) by the Object Lifetime Manager (111B).

When the Event Source (112B), tightly coupled with the Dispatcher (112A), emits an event (250), the Dispatcher (112A) propagates the event (250) to the Private Address Space (PAS) Resolver (111). The Private Address Space Translator (182) translates the PAS address to the virtual one and then the Object Lifetime Manager (111B) extends the lifetime (In the examples given, extension is applicable to the event (250) and not to the event (270) because in this case the Event Listener (114) is already destroyed) of the Event Listener (114) and dispatches the event for it. The extended lifetime is over after completing dispatching the event (250).

When said Event Source (111B) sends an event to the Dispatcher (112A) and the event is propagated to the PAS Resolver (261), it extends the lifetime of the Event Listener (114) for the time required to deliver the notification and drop ownership after delivering it (380). if the Address Space Binder (181) finds out that the ownership is not shared, the Event Listener (114) is disposed.

The detection of a time when an Event Listener (114) may be destroyed, may be based on different processes. An example of such a process is application of an intrusive pointer technique, which is based on keeping in an object a property denoting how many owners the object has.

In the meantime, when the Event Listener (114) removes the callback (231), the Event Listener (114) is not released, because the ownership is shared between the Keeper (113) and the Object Lifetime Manager (111B).

When the Event Source (112B) emits the event (270) and the Event Listener (114) is already deregistered, the PAS Resolver does not send a further notification to the Keeper (113).

The mapping between said virtual and private address space may be modelled by using associative containers such as a map or a flat map (ordered in an array, binary search is used for finding an element, clearing unused entries when reaching an overhead ratio) or just in an array if the small number of elements gives the advantage to use caches. The mapping between address spaces may be implemented in hardware as a set of look-up tables (simple look-up or binary search because new elements are increasing and are added at the end of the table).

The main advantage of the present invention is to deliver an event from an event source to a destination, without changing a current execution context. The second profit is that when a callback is deregistered, there is not any need to keep additional data structures in order to maintain the so-called late notification problem. Thirdly, an implicit synchronization in the Notifier is changed to explicit in the Event Listener. The next gain is that the translation can be done between pure addresses because the object state is kept in the Event Listener. The intrusive pointer technique has been used to implement the last benefit. Since the computer system operates with optimized resources (fewer memory transfers and allocations), the present invention provides a useful, concrete and tangible result.

Further, because management of events in the system is organised in a different way (as described with reference to the figures), the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for managing events in a software system may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for managing events in a computer software system, comprising:
• at least one source (112B) of events (250, 260, 270);
• a Dispatcher module (112A) configured to send said events (250, 260, 270) to event listeners (114) created by a Keeper module (113);
the method being **characterized in that** it comprises the steps of:
• creating a new Event Listener object (114) and assigning to it a new private space identifier (501) by a private address space resolver module (111) comprising an object lifetime manager (111B) operating as an owner of all event listeners (114) having a private space identifier;
• using the identifier, registering a callback routine (502) in a Notifier system (112) configured to manage events;
• sharing the ownership of the Event Listener (114) object between the object lifetime manager (111B) and the keeper (113) operating in parallel;
• in said object lifetime manager (111B):
∘ upon receiving (503) an event from the Dispatcher module (112A), resolving the Private Address Space (PAS) identifier to the Event Listener's (114) object address;
∘ executing the callback routine (504) and checking (505), during said execution, the state of the Event Listener (114) object and if the Event Listener object (114) is not valid, due to lack of ownership by the Keeper (113), stopping the callback routine (252, 262);
∘ after closing the callback (506), denoting that the extended lifetime of the Event Listener (114) is over, deregistering the callback stops thereby stopping the process of delivering notifications (507);
• in said Keeper (113):
∘ awaiting (507) an event (212) to end the life-time of the Event Listener (114) and when such event has been received, deregistering the callback with the respective Private Address Space identifier;
• wherein said event listener (114) object may only be destroyed when neither the Keeper (113) nor the Object Lifetime Manager (111B) require it to be alive.

2. The method according to claim 1 wherein said private space identifier is unique within a private address space.

3. The method according to claim 1 wherein a detection of a time when an Event Listener (114) object may be destroyed is based on an intrusive pointer technique.

4. The method according to claim 1 wherein said shared ownership of the Event Listener (114) object between the object lifetime manager (111B) and the keeper (113) operating in parallel, is present for a time of dispatching a notification to the Event Listener (114) object.

5. The method according to claim 1 wherein said resolving the Private Address Space identifier to the Event Listener's (114) object address is effected by translating said identifiers to virtual addresses (621-624) wherein at the virtual addresses (621-624) there are located pointers to the respective Event Listeners (114).

6. A computer program comprising program code means for performing all the steps of the computer-implemented method according to claim 1 when said program is run on a computer.

7. A computer readable medium storing computer-executable instructions performing all the steps of the computer-implemented method according to claim 1 when executed on a computer.

8. System for managing events in a computer software system, comprising:
• an event source unit (112B) configured to generate events (250, 260, 270);
• a Dispatcher module (112A) configured to send said events (250, 260, 270) to event listeners (114) created by a Keeper module (113);
the system being **characterized in that** it comprises:
• a private address space resolver module (111) comprising an object lifetime manager (111B) operating as an owner of all event listeners (114) having a private space identifier;
• a Notifier system (112) configured to manage events and comprising said Dispatcher module (112A) and said event source unit (112B);
• a controller (110) configured to execute all steps of the method according to claim 1.
